# EUROPEAN PATENT SPECIFICATION

(11) **EP 2 201 279 B1**
(45) Date of publication and mention of the grant of the patent: **25.05.2011**
(21) Application number: 08806597.4
(22) Date of filing: 14.10.2008
(51) Int. Cl.: F16K 37/00

(54) **VALVE TESTING**
TESTEN VON VENTILEN
TEST DE SOUPAPE

(30) Priority: 19.10.2007 GB 0720453
(43) Date of publication of application: 30.06.2010
(73) Proprietor: QinetiQ Limited, London, SW1E 6PD (GB)
(72) Inventor: PENMAN, James, Mitchell, Fife KY11 2XY (GB)
(74) Representative: Northway, Daniel Robert
(86) International application number: PCT/GB2008/003471
(87) International publication number: WO 2009/050442

(56) References cited:
- GB-A- 2 062 812
- JP-A- 57 146 974
- US-A- 4 428 223
- US-A1- 2002 161 456

## Description

This invention relates to valve testing. The invention finds particular application in the testing of pressure relief valves, or safety valves.

Pressure relief valves are designed to open automatically at a pre-determined set pressure level of system pressure and to achieve a pressure relieving flow capacity at a specified pressure and temperature above the set point (overpressure) before re-closing at a pressure below the opening point (blowdown).

Pressure relief valves perform an essential role, responding to system conditions to prevent catastrophic failure when other instruments and control systems fail adequately to control process limits. As such pressure relief valves are widely used in a range of industries, an important example of which is the oil and gas exploration and production industry and in petrochemical plants generally.

Given the role they play in ensuring the safety of process systems, pressure relief valves are subject to a number of performance standards, such as BS EN ISO 4126-6:2003: Safety devices for protection against excessive pressure.

Most pressure relief valves contain neither instrumentation nor external operators, and it is extremely desirable to establish an effective program for inspection and maintenance to ensure that they will operate when called upon in emergency situations. Again, a number of published guidelines exist for recommending the basic structure of an effective pressure relief valve inspection and maintenance program.

Regular testing of valves is one of the most important elements of an effective maintenance program. There are many techniques available for conducting pressure relief valve tests. It would be desirable, in a test, to subject the pressure relief valve to the full operating conditions that it is expected to endure. Such a test has the advantage of assuring that all of the operating characteristics of the valve, set pressure, lift and blowdown are acceptable. However, this type of test is often impractical if not impossible.

A commonly used valve test is therefore the bench-testing alternative whereby valves are transported to a central shop, and keeping of test data can be monitored. Removal of the valve from site, transportation and re-installation however, is costly and time consuming, and can result in significant down time in a process plant.

US 4428223 discloses apparatus for valve testing using a hydraulic rig attached to the valve body via a load bearing frame or yolk. A dynamometer is mounted to the yolk to measure the hydraulic force applied.

This arrangement is however cumbersome, and requires careful and time intensive set up of equipment. Alternative approaches include applicant's copending application GB 0612994 in which an exciter is mounted in series with the valve spring, using resonant enhancement to reduce the force requirements needed to lift the valve member.

It is an object of the present invention to provide an improved method and apparatus for valve testing.

According to a first aspect of the invention there is provided apparatus for testing a safety valve having a valve stem biased relative to a valve body, said apparatus comprising a transducer having an aperture therethrough, for mounting concentrically about said valve stem and adapted to apply a force to said valve stem to oppose said biasing force, a sensor for measuring the force applied, and a sensor for detecting displacement of the valve stem.

The form of the transducer allows mounting directly over the valve stem, and hence for force to be applied directly to the valve stem. This results in a package with low overall dimensions which can easily be carried from valve to valve to perform a series of in situ valve tests more quickly and easily than has previously been possible. Mounting of the transducer over the valve stem provides a simple and reliable attachment method, with the aperture of the transducer sized appropriately for the size of valve and valve stem to be tested. Furthermore an even axial force distribution is reliably achieved.

In selected embodiments, the transducer is a solid state, or monolithic transducer, with force provided without any relative sliding or rotation. Piezoelectric or magnetostrictive transducers are preferred examples.

The use of a piezoelectric or magnetostrictive transducer results in an actuator having essentially no moving parts, and which is simple and reliable and may be controlled with high precision. The apparatus is also very durable and resistant to shock etc, which is useful in harsh in situ environments, such as oil platforms.

The small strains produced by these types of actuator (of the order of 10⁻³) typically result in their use in precision control applications such as laser control and ink jet printing for example. However, the present inventors have found that even in a small, portable device, sufficient force and strain can be generated to perform a steady state lift or 'static lift' of the valve stem, and hence closure member, which allows the set point to be derived simply and accurately.

The transducer will typically be annular having a cylindrical form and typically feature a cylindrical bore. However, other configurations of transducer having an aperture adapted to accept a valve stem passing through them and to locate concentrically about a valve stem, and which can exert a force directly on the valve stem passing through the transducer are possible.

A further advantage of using such an arrangement is that the sensor for measuring applied force can be integral with the transducer in preferred embodiments. A piezoelectric transducer with an integral load cell for example can perform actuation and measurement of the force as a single unit.

By using a strain gauge for example fitted to the piezoelectric transducer body the transducer can additionally be made to detect the displacement produced. In this way, a single compact unit can provide all functions sufficient for valve testing if desired. Alternatively or additionally, an acoustic detector can be employed to detect the onset of valve lift or valve leakage. Alternatives to strain gauges for the measurement of displacement, for example linear variable differential transformers (LVDT) or capacitance devices, may be employed externally to the valve stem.

Although the relatively small strains produced by a piezoelectric or magnetostrictive device have been found sufficient to test at least certain valves, it may be desirable to amplify the displacement produced by means of a mechanical linkage or by incorporating an additional transducer or a hybrid transducer utilising a Shape Memory Alloy. Such an embodiment might be particularly beneficial in the case of larger gauge valves.

In a further aspect of the invention there is provided a method for testing a safety valve having a valve stem biased relative to the valve body, said method comprising mounting a transducer having a central aperture concentrically about the valve stem; arranging for the transducer to act on the valve stem; and operating the transducer to exert a force on said stem relative to said body to oppose said biasing.

The method of mounting the annular transducer or actuator over the valve stem is very simple, and ensures positive location. With the transducer and stem concentric, the transducer can easily be arranged to act on the stem, eg by a simple locking nut, resulting in uniform force application, with little or no off axis component. The set up time of the apparatus is extremely quick using this method, allowing tests to be performed with increased ease, efficiency and reliability.

In a typical embodiment the method will further comprise detecting the onset of valve lift, recording the value of the force exerted, and from said recorded value, calculating the set point of the valve.

Further aspects and preferred features of the present invention are set out in the accompanying claims.

The invention also provides a computer program and a computer program product for carrying out any of the methods described herein and/or for embodying any of the apparatus features described herein.

The invention extends to methods, apparatus and/or use substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the invention will now be described with reference to the accompanying drawings in which:
Figure 1 is a sectional view of a relief valve according to an aspect of the present invention;
Figure 2 is a perspective view of an embodiment of the invention;
Figure 3 shows a hand held valve test apparatus;
Figure 4 illustrates alternative forms of transducer,
Figure 5 illustrates a system for maintaining a plurality of valves.

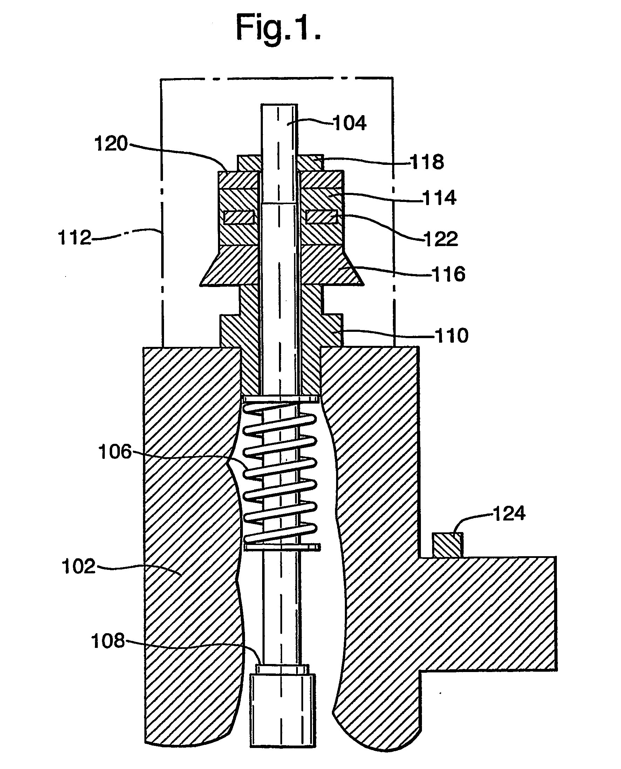

Figure 1 shows a valve generally designated 100, including a valve body 102 and a valve stem 104. A spring 106 urges the valve stem to close against a valve seat 108. The valve stem passes up through an adjustment collar 110, where it can be accessed after removal of a valve cap illustrated by dashed line 112. A piezo ceramic transducer or actuator 114 is annular in form and located concentric about the valve stem, and is mounted on a tapered spacer 116, which is in turn mounted on the collar 110. A fastening (in this case retaining nut 118) couples the transducer or actuator 114 to the valve stem, and in use the transducer or actuator applies a force and consequently a displacement to the valve stem, relative to the collar and hence valve body. A load cell 120 is also provided to measure the force provided by the exciter, and this load cell may be made integral with the exciter. In order to detect displacement of the valve stem, a strain gauge bridge 122 is provided, and in Figure 1 is shown embedded within the piezo transducer. Because the transducer is mounted concentrically about the valve stem, and because the use of piezo actuation affords a small overall diameter, it can be permanently mounted within the valve cap, without significantly altering the overall appearance and dimensions of the valve. Such a permanently installed device is securely located by the stem, and requires little or no adjustment during its service life.

The transducer is illustrated here as piezo ceramic or PZT, but may be made of magnetostrictive materials such as Terfenol-D (RTM). Further alternatives include voice coils or shape memory alloys.

An acoustic sensor 124 is shown adjacent to the valve outlet, and can determine the onset of valve lift and valve closure, or valve leakage. A pressure sensor (not shown in Figure 1) can be used to provide line pressure, or alternatively line pressure can be determined from existing plant instrumentation, for example over a data link.

Embodiments of the present invention advantageously have low overall dimensions, as can be seen in the Example of Figure 1 where the exciter, load cell and strain gauge are adapted to fit within a modified valve cap, and can be a dedicated, permanent component of the valve assembly.

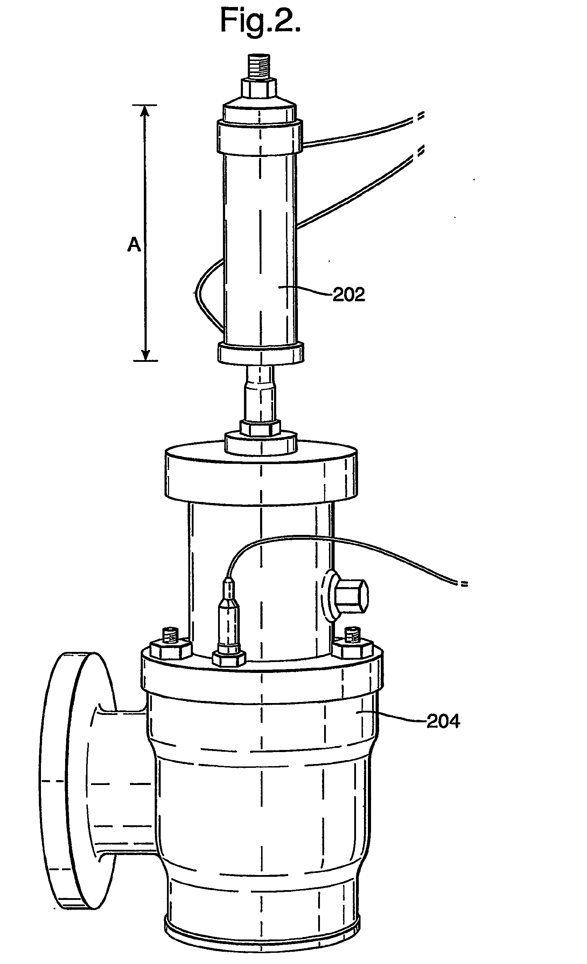

A perspective view of an embodiment of the invention is shown in Figure 2. From this figure it can be seen that the overall height of the transducer and force sensor 202, shown as dimension A, can be small in relation to the valve body. In this case dimension A is approximately 150mm, and the valve body 204 can be seen to be approximately 300mm in height. Similarly the external diameter of the transducer is approximately 50mm. Depending on the size of valve which the apparatus is designed to test, transducers as small as 100mm or 50mm in height are possible.

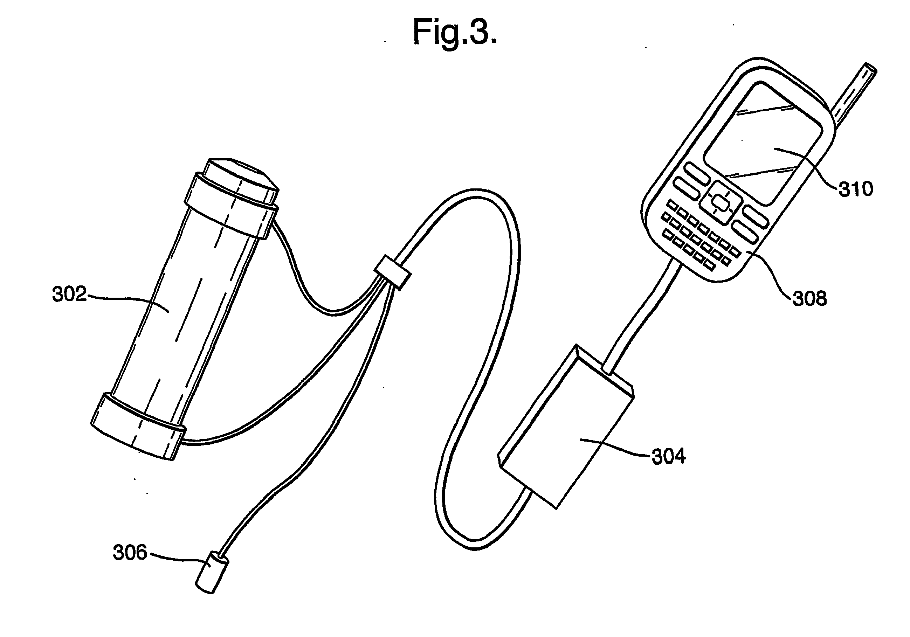

Because of the low overall dimensions, the invention can be embodied in a handheld, portable device. An example of such a device is illustrated schematically in Figure 3.

Here the transducer assembly 302 for connection to a valve stem, is shown connected to a processing unit 304. The transducer assembly is a moulded assembly including the annular piezoceramic actuator, a displacement sensor and a load cell. The processing unit includes the signal conditioning electronics for the sensors and a power amplifier for driving the actuator. Additional connectors 306 are provided via flying leads to attach to the valve body away from the stem, for acoustic emissions (AE) sensors and/or line pressure connections for example. The processing unit is in turn connected to a user interface 308, which in this example comprises a commercially available personal digital assistant (PDA) including a touch screen 310, however a smartphone or small handheld computer could also be employed, running application specific software. Alternatively, the processing unit and user interface could be combined into a single purpose built unit.

A test operation can be instructed simply and quickly using controls on the interface, and the appropriate test steps are then automatically performed by the processing unit, and the test results supplied back to the interface for review by the user. The test results can be logged locally in a memory, or may be communicated (preferably wirelessly and typically using existing communications capabilities of a smartphone for example) to a central storage location. Using such an apparatus then, a user can arrive at a valve, attach the test equipment to the valve in situ, conduct the test and log the results in less than 5 or 10 minutes for example.

An exemplary test sequence consists of removing the valve cap to expose the top of the valve body, and commonly an adjustment collar, and the valve stem. At this stage a stem extension piece can be mounted to the stem, for example if a sufficiently long portion is not already exposed. An appropriately sized transducer can then be slid over the exposed portion of the valve stem, to bear against the exterior of the valve body or collar at its base. Optionally a rigid spacer may be located between the base of the transducer, and the part of the valve which it bears against. This simple step results in the transducer being accurately and securely located concentrically with the valve stem. With the stem passing through and protruding from the top of the transducer, a locking nut is screwed down onto the top of the stem to abut the top of the transducer. The transducer is now arranged to provide a compressive force between the valve body and the valve stem. An acoustic emission sensor can be applied near the valve closure member if required, and a pressure sensor applied to a local tapping if appropriate. If no appropriate tapping exists, line pressure values as determined from a control room or other local display can be entered manually.

With the apparatus in place, a ramping a voltage is applied to the transducer by a controller, to produce a steadily increasing force on the valve stem, opposing the biasing force of the spring. As the applied voltage is increased, the force applied, displacement of the valve stem and the line pressure of the valve are monitored. When the applied force reaches a threshold value, the valve lifts. At this point the force provided by the transducer is substantially in equilibrium with the valve spring force, resulting in a so called 'static lift'.

The onset of valve lift is detected by the displacement of the stem, and the values of line pressure and applied force are recorded and supplied back to the processor, where the valve set point is calculated. Alternatively or additionally, the onset of valve lift can be sensed by an acoustic sensor.

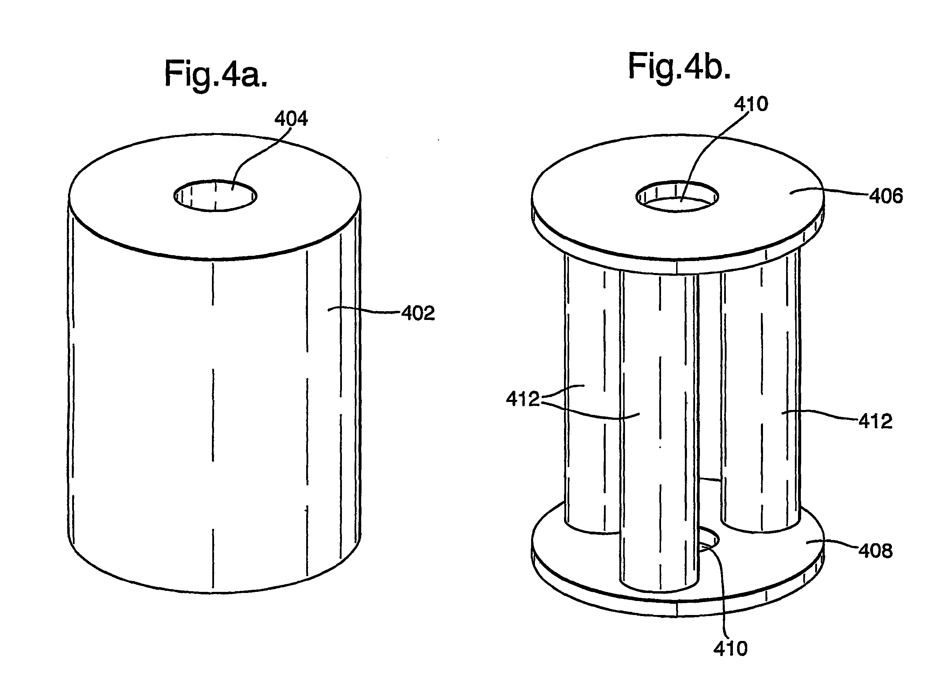

The form of the transducer or actuator of the above examples is shown more clearly in Figure 4a as a single actuation element comprising cylinder of piezoelectric material 402 having a cylindrical internal bore 404. An alternative, but functionally equivalent form of piezoelectric transducer is shown in Figure 4b. Rigid top 406 and bottom plates 408 are both thin circular discs, having central apertures 410. The plates are axially spaced apart, and located between the discs are three columns 412 of piezoelectric material. Further embodiments may employ different numbers of columns, or actuation elements, and two or four element designs are envisaged. The columns are all radially offset from the central aperture, and evenly distributed circumferentially. The columns have substantially identical actuation properties, and are operated simultaneously as a single group.

By arranging actuation elements adjacent to and symmetrically about the central aperture, and hence about the valve stem when mounted to a valve, a substantially uniform force is experienced at the top and bottom surfaces of the transducer, around the circumference of the central aperture. Furthermore, in both transducers of Figure 4, these are essentially no moving parts. Neither transducer includes any relative sliding or rotation, the overall strain resulting solely from solid state or monolithic, force producing elements.

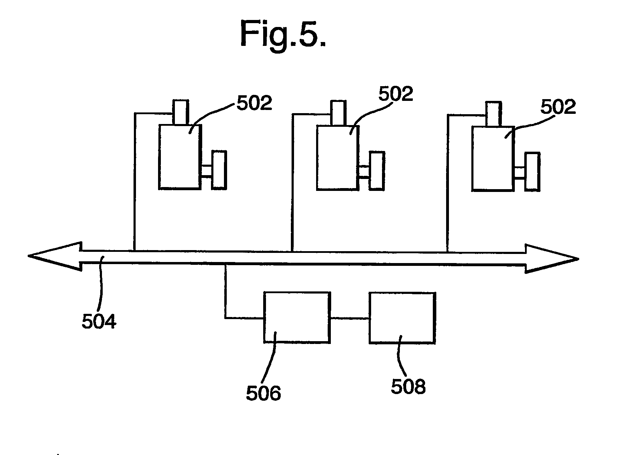

The invention may be embodied in an installation including a number of valves, some or all of which include permanently integrated test apparatus. A multiple valve monitoring system is illustrated in Figure 5. A set of valves 502 of a plant or installation each includes valve measuring or monitoring apparatus, for example as described above with respect to Figure 1. Each valve is connected to an information bus 504, which may be a dedicated valve monitoring bus, or may be an existing plant wide bus for example. Also communicating with the bus is a controller 506 and optionally a user interface 508. In operation, the controller can initiate a test sequence in any or all of the valves in the set.

The controller can carry out a valve test of individual or groups of valves as required by a user, and/or can carry out tests periodically as part of an automatic maintenance operation, without human intervention.

It will be understood that the present invention has been described above purely by way of example, and modification of detail can be made within the scope of the invention.

## Claims

1. Apparatus for testing a safety valve (100) having a valve stem (104) biased relative to a valve body (102), said apparatus comprising:
a transducer (114) having an aperture therethrough, for mounting concentrically about said valve stem (104) and adapted to apply a force to said valve stem to oppose said biasing force,
a sensor (120) for measuring the force applied, and
a sensor (122) for detecting displacement of the valve stem.

2. Apparatus according to Claim 1, wherein said transducer is a solid state transducer.

3. Apparatus according to Claim 1 or Claim 2, wherein said transducer is a piezoelectric or magnetostrictive transducer.

4. Apparatus according to Claim 2 or Claim 3, wherein said transducer comprises an annular actuation element.

5. Apparatus according to Claim 2 or Claim 3, wherein said transducer comprises a plurality of actuation elements arranged circumferentially about said aperture.

6. Apparatus according to any preceding claim, wherein said sensor for measuring applied force is integral with said transducer.

7. Apparatus according to any preceding claim, wherein said transducer has a maximum displacement less than or equal to 200 microns.

8. Apparatus according to any preceding claim, further comprising a user interface, wherein said apparatus is hand held.

9. A valve having a valve stem biased in a biasing direction relative to a valve body, said valve further including testing apparatus according to any preceding claim.

10. A valve according to Claim 9, wherein said transducer is permanently installed within a valve housing.

11. A method for testing a safety valve having a valve stem biased relative to the valve body, said method comprising:
mounting a transducer having an aperture therethrough concentrically about the valve stem;
arranging for the transducer to act on the valve stem; and
operating the transducer to exert a force on said stem relative to said body to oppose said biasing.

12. A method according to Claim 11, further comprising detecting the onset of valve lift, recording the value of the force exerted, and from said recorded value, calculating the set point of the valve.

13. A method according to Claim 11 or Claim 12, wherein said transducer is a solid state transducer.

14. A method according to any one of Claims 11, 12 or 13, wherein said transducer is a piezoelectric or magnetostrictive transducer.

## Patentansprüche

1. Vorrichtung zum Testen eines Sicherheitsventils (100), das einen Ventilschaft (104) besitzt, der in Bezug auf einen Ventilkörper (102) vorgespannt ist, wobei die Vorrichtung aufweist:
einen Transducer (114), der eine durchgehende Öffnung zur konzentrischen Anbringung um den Ventilschaft (104) herum aufweist und der so ausgebildet ist, dass er eine Kraft auf den Ventilschaft ausübt, die der Vorspannungskraft entgegengesetzt ist,
einen Sensor (120) zum Messen der ausgeübten Kraft und
einen Sensor (122) zum Erfassen einer Verschiebung des Ventilschafts.

2. Vorrichtung nach Anspruch 1, bei welcher der Transducer ein Festkörper-Transducer ist.

3. Vorrichtung nach Anspruch 1 oder Anspruch 2, bei welcher der Transducer ein piezoelektrischer oder ein magnetostriktiver Transducer ist.

4. Vorrichtung nach Anspruch 2 oder Anspruch 3, bei welcher der Transducer ein ringförmiges Betätigungselement umfasst.

5. Vorrichtung nach Anspruch 2 oder Anspruch 3, bei welcher der Transducer mehrere Betätigungselemente aufweist, die in Umfangsrichtung um die Öffnung herum angeordnet sind.

6. Vorrichtung nach einem der vorhergehenden Ansprüche, bei welcher der Sensor zum Messen der ausgeübten Kraft mit dem Transducer integriert ist.

7. Vorrichtung nach einem der vorhergehenden Ansprüche, bei welcher der Transducer eine maximale Verschiebung aufweist, die gleich 200 µm, oder kleiner als 200 µm ist.

8. Vorrichtung nach einem der vorhergehenden Ansprüche, die ferner eine Benutzerschnittstelle aufweist, wobei die Vorrichtung ein Handgerät ist.

9. Ventil, das einen Ventilschaft besitzt, der in Bezug auf einen Ventilkörper in einer Vorspannungsrichtung vorgespannt ist, wobei das Ventil ferner eine Testvorrichtung nach einem der vorhergehenden Ansprüche aufweist.

10. Ventil nach Anspruch 9, bei dem der Transducer fest in einem Ventilgehäuse installiert ist.

11. Verfahren zum Testen eines Sicherheitsventils, das einen Ventilschaft besitzt, der in Bezug auf den Ventilkörper vorgespannt ist,
wobei das Verfahren folgende Maßnahmen umfasst:
Anbringen eines Transducers, der eine durchgehende Öffnung aufweist, konzentrisch um den Ventilschaft (104) herum, Anordnet des Transducers in der Weise, dass er auf den Ventilschaft einwirkt,
und
Betätigen des Transducers in der Weise, dass er in Bezug auf den Ventilkörper eine Kraft auf den Ventilschaft ausübt, die der Vorspannungskraft entgegengesetzt ist.

12. Verfahren nach Anspruch 11, das ferner folgende Maßnahmen umfasst:
Erfassen des Beginns eines Ventilhubs,
Erfassen des Wertes der ausgeübten Kraft und
Berechnen des Sollwertes des Ventils.

13. Verfahren nach Anspruch 11 oder Anspruch 12, bei dem der Transducer ein Festkörper-Transducer ist.

14. Verfahren nach einem der Ansprüche 11, 12 oder 13, bei dem der Transducer ein piezoelektrischer oder ein magnetostriktiver Transducer ist.

## Revendications

1. Dispositif pour tester une soupape de sûreté (100) ayant une tige de soupape (104) inclinée par rapport à un corps de soupape (102), ledit dispositif comprenant :
un transducteur (114) traversé par une ouverture, à monter de manière concentrique autour de ladite tige de soupape (104) et adapté pour appliquer une force sur ladite tige de soupape en opposition à ladite force d'inclinaison,
un capteur (120) pour mesurer la force appliquée, et
un capteur (122) pour détecter un déplacement de la tige de soupape.

2. Dispositif selon la revendication 1, dans lequel ledit transducteur est un transducteur à semi-conducteur.

3. Dispositif selon la revendication 1 ou la revendication 2, dans lequel ledit transducteur est un transducteur piézoélectrique ou à magnétostriction.

4. Dispositif selon la revendication 2 ou la revendication 3, dans lequel ledit transducteur comprend un élément d'actionnement annulaire.

5. Dispositif selon la revendication 2 ou la revendication 3, dans lequel ledit transducteur comprend une pluralité d'éléments d'actionnement disposés de manière périphérique autour de ladite ouverture.

6. Dispositif selon l'une quelconque des revendications précédentes, dans lequel ledit capteur destiné à mesurer la force appliquée est intégré audit transducteur.

7. Dispositif selon l'une quelconque des revendications précédentes, dans lequel ledit transducteur a un déplacement maximal inférieur ou régal à 200 microns.

8. Dispositif selon l'une quelconque des revendications précédentes, comprenant en outre une interface utilisateur, ledit dispositif étant portatif.

9. Soupape ayant une tige de soupape inclinée dans une direction d'inclinaison par rapport à un corps de soupape, ladite soupape incluant en outre un dispositif de test selon l'une quelconque des revendications précédentes.

10. Soupape selon la revendication 9, dans laquelle ledit transducteur est installé de manière permanente dans un boîtier de soupape.

11. Procédé pour tester une soupape de sûreté ayant une tige de soupape inclinée par rapport au corps de soupape, ledit procédé comprenant :
un montage d'un transducteur traversé par une ouverture de manière concentrique autour de la tige de soupape ;
un agencement du transducteur pour qu'il agisse sur la tige de soupape ; et
un actionnement du transducteur pour qu'il exerce une force sur ladite tige par rapport audit corps en opposition à ladite inclinaison.

12. Procédé selon la revendication 11, comprenant en outre une détection du début de la levée de la soupape, un enregistrement de la valeur de la force exercée, et à partir de ladite valeur enregistrée, un calcul du point de consigne de la soupape.

13. Procédé selon la revendication 11 ou la revendication 12, dans lequel ledit transducteur est un transducteur à semi-conducteur.

14. Procédé selon l'une quelconque des revendications 11, 12 ou 13, dans lequel ledit transducteur est un transducteur piézoélectrique ou à magnétostriction.
